# EUROPÄISCHE PATENTSCHRIFT

(11) **EP 3 512 976 B1**
(45) Veröffentlichungstag und Bekanntmachung des Hinweises auf die Patenterteilung: **18.06.2025**
(21) Anmeldenummer: 17777793.5
(22) Anmeldetag: 12.09.2017
(51) Int. Cl.: C22C 38/04, C21D 6/00, C21D 8/02, C22C 38/38, B21D 26/033, C21D 8/10, C21D 6/04, C21D 8/04, C21D 9/46

(54) **VERFAHREN ZUR HERSTELLUNG EINES UMGEFORMTEN BAUTEILS AUS EINEM MITTELMANGANHALTIGEN STAHLFLACHPRODUKT**
METHOD FOR PRODUCING A SHAPED COMPONENT FROM A MEDIUM-MANGANESE FLAT STEEL PRODUCT
PROCÉDÉ POUR LA FABRICATION D'UNE PIÈCE FAÇONNÉE À PARTIR D'UN PRODUIT PLAT EN ACIER À TENEUR MOYENNE EN MANGANÈSE

(30) Priorität: 16.09.2016 DE 102016117494
(43) Veröffentlichungstag der Anmeldung: 24.07.2019
(73) Patentinhaber: Salzgitter Flachstahl GmbH, 38239 Salzgitter (DE)
(72) Erfinder: PALZER, Peter, 38704 Liebenburg (DE); EVERTZ, Thomas, 31228 Peine (DE); OTTO, Manuel, Cremlingen 38162 (DE); KÖHLER, Kai, 31171 Nordstemmen (DE)
(74) Vertreter: Moser Götze & Partner Patentanwälte mbB
(86) Internationale Anmeldenummer: PCT/EP2017/072886
(87) Internationale Veröffentlichungsnummer: WO 2018/050634

(56) Entgegenhaltungen:
- EP-A1- 2 778 247
- EP-A2- 2 383 353
- WO-A1-2014/180456
- AUTORENKOLLEKTIV: "Spurenelemente im Stahl - Moeglichkeiten zur Beeinflussung im Smelzbetrieb", SPURENELEMENTE IN STAEHLEN, VERLAG STAHLEISEN, DUESSELDORF, DE, 1 January 1985 (1985-01-01), pages 19 - 22, XP002433212

## Beschreibung

Die Erfindung betrifft ein Verfahren zur Herstellung eines Bauteils aus einem mittelmanganhaltigen Stahlflachprodukt mit 4 bis 12 Gew.-% Mn, vorzugsweise mehr als 5 bis weniger als 10 Gew.-% Mn, und mit TRIP/TWIP-Effekt.

Aus der europäischen Patentanmeldung EP 2 383 353 A2 ist ein Stahlflachprodukt aus einem manganhaltigen Stahl bekannt, der eine Zugfestigkeit von 900 bis 1500 MPa aufweist und aus den folgenden Elementen (Gehalte in Gewichtsprozent und bezogen auf die Stahlschmelze) besteht: C: bis 0,5; Mn: 4 bis 12,0; Si: bis zu 1,0; Al: bis zu 3,0; Cr: 0,1 bis 4,0; Cu: bis zu 4,0; Ni: bis zu 2,0; N: bis zu 0,05; P: bis zu 0,05; S: bis zu 0,01 sowie Rest Eisen und unvermeidbare Verunreinigungen. Optional sind ein oder mehrere Elemente aus der Gruppe "V, Nb, Ti" vorgesehen, wobei die Summe der Gehalte dieser Elemente höchstens gleich 0,5 ist. Dieser Stahl soll sich dadurch auszeichnen, dass dieser kostengünstiger herzustellen ist als hochmanganhaltige Stähle und gleichzeitig hohe Bruchdehnungswerte und damit einhergehend eine deutlich verbesserte Umformbarkeit besitzt.

Höherfeste Stähle mit einem mittleren Mangangehalt sind auch aus den Offenlegungsschriften US 2012/0070330 A1 und DE 10 2008 005 158 A1 bekannt. Die US 2012/0070330 A1 bezieht sich auf ein Verfahren zur Herstellung eines Stahlbandes aus einem höherfesten Stahl mit einem mittleren Mangangehalt von 4 bis 14 Gew.-% Mn. Im Zuge der Herstellung wird das Stahlband bei einer Walztemperatur von 60°C bis 500°C während des Walzens mit einer Walzreduktion R von 20% bis 70% gewalzt.

Auch sind in der deutschen Offenlegungsschrift DE 10 2012 013 113 A1 bereits sogenannte TRIP-Stähle beschrieben, die ein überwiegend ferritisches Grundgefüge mit eingelagertem Restaustenit aufweisen, der während einer Umformung zu Martensit umwandeln kann (TRIP-Effekt). Wegen seiner starken Kaltverfestigung erreicht der TRIP-Stahl hohe Werte der Gleichmaßdehnung und Zugfestigkeit. TRIP-Stähle eignen sich für den Einsatz u. a. in Struktur-, Fahrwerks- und crashrelevanten Bauteilen von Fahrzeugen, als Blechplatinen, sowie als geschweißte Platinen. Weitere Stähle mit TRIP und/oder TWIP-Eigenschaften werden in den Offenlegungsschriften US 2007/0289717 A1, DE 10 2012 111 959 A1, WO 2013/064698, WO 2005/061152 A1 und US 2006/0179638 genannt. Auch die Patentschriften DE 10 2004 054 444 B3 und US 6,387,192 B1 offenbaren Stähle mit TRIP/TWIP-Eigenschaften.

Des Weiteren ist in der deutschen Patentschrift DE 10 2013 104 298 B4 als Umformverfahren für mittel- oder hochmanganhaltige Stahlbänder ein Walzprofilieren beschrieben, das auch als Rollformen bezeichnet wird. Das Rollformen beziehungsweise Walzprofilieren ist ein kontinuierliches Biegeverfahren, bei dem die Stahlbänder von einer Vielzahl Walzenpaaren schrittweise bis zu Walzprofilprodukten in einer gewünschten Endform umgeformt werden. Häufig erfolgte eine Kombination des Rollformens mit anderen Fertigungsverfahren wie beispielsweise Stanzen, Längsschweißen oder Prägen, um nahezu beliebige Profilformen auch mit über Bauteillänge veränderlichen Querschnitten herzustellen.

Ein weiteres bekanntes Umformverfahren, das sogenannte Innenhochdruckumformen, ist beispielsweise an Hand einer Innenhochdruckumformung von Rohren in der Offenlegungsschrift DE 10 2008 014 213 A1 beschrieben. Hierbei werden rohrförmige Werkstücke in mindestens zweiteilige Werkzeuge eingelegt und mit einem Wirkmedium, das unter hohem Druck steht, innenseitig beaufschlagt. Hierdurch wird das Werkstück aufgeweitet, in eine Gravur beziehungsweise Geometrie des Werkzeugs geformt, teilweise nachgeschoben und erhält somit die Form des Werkzeugs. Der Werkstoff muss dabei so ausgelegt sein, dass auch lokal eine hohe Umformung ohne Werkstoffversagen aufgenommen werden kann.

Ferner ist aus der europäischen Offenlegungsschrift EP 2 778 247 A1 ein Verfahren zur Herstellung eines heißgepressten Kraftfahrzeugbauteils aus einem mittelmanganhaltigen Stahlflachprodukt mit einem Mangangehalt von 3 bis 15 Gew.-%, bevorzugt von 5 bis 11 Gew.-%, bekannt. Dieses Herstellverfahren umfasst eine Wärmebehandlung, in der das Stahlflachprodukt bzw. das Kraftfahrzeugbauteil vor oder nach dem Heißumformen auf eine Temperatur in dem Bereich von Ac1 bis Ac3 mit einer Heizrate von 1° C/s bis 1000 °C/s und einer Haltezeit von 1 bis 10.000s aufgeheizt wird. Das Heißpressen bzw. Heißumformen weist einen Abkühlschritt mit

Abkühlraten im Bereich von 1° C/s bis 1000° C/s auf. In den zugehörigen Ausführungsbeispielen werden Temperaturen für die Wärmebehandlung im Bereich von 500 bis 850 °C, Haltezeiten von 300s und Abkühlraten von 5 bis 45° C/s angegeben.

Auch ist aus der Offenlegungsschrift WO 2014/180456 A1 ein Verfahren zur Herstellung eines umgeformten Bauteils, insbesondere Karosserie- oder Fahrwerksbauteils, aus einem im Ausgangszustand metastabilen austenitischen Leichtbaustahl bekannt, der einen temperaturabhängigen TRIP- und/oder TWIP-Effekt während der Umformung aufweist. Eine Umformung des Bauteils oberhalb der Raumtemperatur bei 40 bis 160° C soll den temperaturabhängigen TRIP-/TWIP-Effekt vermeiden und eine hohe Zähigkeit des Bauteils erzielen.

Hiervon ausgehend liegt der vorliegenden Erfindung die Aufgabe zu Grunde, ein Verfahren zur Herstellung eines Bauteils aus einem mittelmanganhaltigen Stahlflachprodukt zu schaffen, das sich durch eine Verbesserung der Umformgrade des umgeformten Bauteils bei gleichzeitiger Verringerung der Umformkräfte auszeichnen.

Diese Aufgabe wird durch ein Verfahren zur Herstellung eines Bauteils aus einem mittelmanganhaltigen Stahlflachprodukt mit den Merkmalen des Anspruchs 1gelöst. Vorteilhafte Ausgestaltungen der Erfindung sind in den Unteransprüchen angegeben. Erfindungsgemäß wird durch ein Verfahren zur Herstellung eines Bauteils aus einem mittelmanganhaltigen Stahlflachprodukt, das mit folgender chemischer Zusammensetzung (in Gew.-%) hergestellt wird: C: 0,0005 bis 0,9, vorzugsweise 0,05 bis 0,35; Mn: 4 bis 12, vorzugsweise größer 5 bis kleiner 10; Rest Eisen einschließlich unvermeidbarer stahlbegleitender Elemente, mit optionaler Zulegierung von:
Al: 0 bis 10, bevorzugt 0,05 bis 5, insbesondere bevorzugt größer 0,5 bis 3; Si: 0 bis 6, bevorzugt 0,05 bis 3, insbesondere bevorzugt 0,1 bis 1,5; Cr: 0 bis 6, bevorzugt 0,1 bis 4, insbesondere bevorzugt größer 0,5 bis 2,5; Nb: 0 bis 1, bevorzugt 0,005 bis 0,4, insbesondere bevorzugt 0,01 bis 0,1; V: 0 bis 1,5, bevorzugt 0,005 bis 0,6, insbesondere bevorzugt 0,01 bis 0,3; Ti: 0 bis 1,5, bevorzugt 0,005 bis 0,6, insbesondere bevorzugt 0,01 bis 0,3; Mo: 0 bis 3, bevorzugt 0,005 bis 1,5, insbesondere bevorzugt 0,01 bis 0,6; Sn: 0 bis 0,5, bevorzugt kleiner 0,2, insbesondere bevorzugt kleiner 0,05; Cu: 0 bis 3, bevorzugt kleiner 0,5, insbesondere bevorzugt kleiner 0,1; W: 0 bis 5, bevorzugt 0,01 bis 3, insbesondere bevorzugt 0,2 bis 1,5 ; Co: 0 bis 8, bevorzugt 0,01 bis 5, insbesondere bevorzugt 0,3 bis 2; Zr: 0 bis 0,5, bevorzugt 0,005 bis 0,3, insbesondere bevorzugt 0,01 bis 0,2; Ta: 0 bis 0,5, bevorzugt 0,005 bis 0,3, insbesondere bevorzugt 0,01 bis 0,1; Te: 0 bis 0,5, bevorzugt 0,005 bis 0,3, insbesondere bevorzugt 0,01 bis 0,1; B: 0 bis 0,15, bevorzugt 0,001 bis 0,08, insbesondere bevorzugt 0,002 bis 0,01; P: kleiner 0,1, bevorzugt kleiner 0,04; S: kleiner 0,1, bevorzugt kleiner 0,02; N: kleiner 0,1, bevorzugt kleiner 0,05; das Stahlflachprodukt mit einem Gefüge hergestellt wird, das einen Austenitanteil von 10 bis 80 %, 20 bis 90 % Martensit, Ferrit und Bainit, wobei mindestens 30 % des Martensits als angelassener Martensit vorliegt, aufweist, bevorzugt 40 bis 80 % Austenit, weniger als 20 % Ferrit/Bainit und Rest Martensit aufweist,, und mit TRIP/TWIP-Effekt, umfassend die Schritte: - Vorwärmen des Stahlflachprodukts auf eine gewünschte Temperatur im Bereich von 60 °C bis Ac3 und - Umformen des Stahlflachprodukts zu einem Bauteil mit einem ersten Umformschritt bei einer Temperatur des Stahlflachprodukts von 60 °C bis 450 °C, wobei durch das Vorwärmen die für das Umformen gewünschte Temperatur vor dem ersten Umformschritt bereits erreicht ist, also nicht erst durch die Umformung an sich entsteht, erreicht, dass bei einem Umformen des Stahlflachprodukts zu einem Bauteil der maximale Umformgrad des umgeformten Stahlflachprodukts durch Verringerung der Verfestigung während des Umformens erhöht wird.

Das vorgenannte Merkmal - mit einem ersten Umformschritt bei einer Temperatur - wird dahingehend verstanden, dass vor dem ersten Umformschritt die gewünschte Temperatur bereits erreicht ist und nicht erst durch die Umformung an sich entsteht. Mit der Erhöhung der Temperatur vor der ersten Umformung geht auch eine Verringerung der erforderlichen Umformkräfte einher. Auch wird eine Erhöhung des Restumformvermögens der umgeformten Bauteile mit Zugfestigkeiten von größer 800 MPa bis 2000 MPa bei Bruchdehnungen von größer 3 % in den am stärksten umgeformten Bereichen bewirkt. Das Vorwärmen des Stahlflachprodukts kann für das Coil oder das abgewickelte Band- oder Tafelmaterial erfolgen. Durch das Umformen mit dem erfindungsgemäßen Vorwärmen des Stahlflachprodukts vor dem ersten Umformschritt wird während des Umformvorgangs eine Umwandlung von metastabilen Austenit in Martensit (TRIP-Effekt) ganz oder teilweise unterdrückt, wobei sich im Austenit Verformungszwillinge (TWIP-Effekt) bilden können. Hierdurch wird die erfindungsgemäße und vorteilhafte Vermeidung der Verfestigung und eine Reduktion der Umformkräfte erreicht, sowie dadurch das Gesamtumformvermögen erhöht.

In einer weiteren Verfahrensvariante ist vorgesehen, dass das Stahlflachprodukt mit weiteren Umformschritten bei einer Temperatur des Stahlflachprodukts von Raumtemperatur bis unterhalb Ac3, vorzugsweise von Raumtemperatur bis 450 °C, zu einem Bauteil umgeformt wird. Hierdurch können gezielt Verformungszwillinge eingebracht werden, welche bei Raumtemperatur weiter in Martensit umwandeln und dadurch das Energieaufnahmevermögen erhöhen und einen höheren Umformgrad zulassen.

Im Zusammenhang mit der vorliegenden Erfindung wird Raumtemperatur als im Bereich zwischen 15 bis 25 °C liegend definiert.

In einer weiteren Verfahrensvariante ist vorgesehen, dass das Stahlflachprodukt mit weiteren Umformschritten bei einer Temperatur des Stahlflachprodukts von -100 °C bis 60 °C zu einem Bauteil umgeformt wird. Hierdurch wird gezielt metastabiler Austenit in Martensit umgewandelt, wodurch die Festigkeit in den dem betroffenen Bereich des Stahlflachprodukts deutlich erhöht wird.

Besonders vorteilhaft kann das Stahlflachprodukt mit weiteren Umformschritten bei einer Temperatur von -100 °C bis unterhalb Ac3, zu einem Bauteil umgeformt werden. Die Umformung bei tiefen Temperaturen wird in den letzten Umformschritten eingesetzt.

Besonders vorteilhaft ist vorgesehen, dass das Stahlflachprodukt mit den weiteren einzelnen Umformschritten bei unterschiedlichen Temperaturen, die jeweils lokal begrenzt sein können, zu einem Bauteil umgeformt wird. Hierdurch kann optional eine gezielte und lokale Einstellung von Festigkeits- und Dehnungseigenschaften des Bauteils durch die Variation der Umformtemperatur erreicht werden. Somit erfolgt lokal eine gezielte Einstellung von Eigenschaften durch lokales Kühlen oder Erhitzen. Durch gezieltes Abkühlen werden vor allem höhere Festigkeiten und durch lokales Erwärmen höhere Restdehnungen beziehungsweise ein höheres Umformvermögen erreicht.

In einer Variante ist vorgesehen, dass das Stahlflachprodukt von einer Seite vorgewärmt wird. Alternativ kann vorgesehen werden, dass das Stahlflachprodukt von beiden Seiten vorgewärmt wird.

Um das erfindungsgemäße Temperaturfenster für die Umformung einzuhalten, kann das Stahlflachprodukt beim Umformen zwischen den Umformschritten auf Temperaturen zwischen -100 °C bis unterhalb Ac3 - je nach der gewünschten Verfahrensweise - zwischenerwärmt oder zwischengekühlt werden.

Besonders vorteilhaft eignet sich das Verfahren, um das Stahlflachprodukt mittels Rollumformen umzuformen.

Im Zuge des Rollumformens erfährt das Stahlflachprodukt mindestens eine Abkantung, eine Stauchung, eine bereichsweise Dickenreduktion, eine Prägung, eine Stanzung oder ein Einnuten oder Kombinationen hiervon in einer Vielzahl von aufeinander abfolgenden Verformungs- oder Bearbeitungsschritten. Auch können Bauteile in Form von geschlossenen Profilen erzeugt werden, welches optional nach dem Rollumformen hierzu geschweißt, vorzugsweise längsnahtgeschweißt, werden.

Auch eignet sich das Verfahren besonders vorteilhaft, um das Stahlflachprodukt mittels Innenhochdruckumformen umzuformen. Das Innenhochdruckumformen erfolgt vorzugsweise mittels festen, flüssigen oder gasförmigen Wirkmedien. In bekannter Weise wird im Zuge des Innenhochdruckumformens das Stahlflachprodukt, insbesondere ein gewalztes Warm- oder Kaltband, zu einem Spaltrohr eingeformt und dann zu einem rohrförmigen Bauteil, insbesondere einem Rohr, längsnahtgeschweißt oder alternative spiralförmig eingeformt und zu einem rohrförmigen Bauteil, insbesondere einem Rohr, spiralnahtgeschweißt. Anschließend erfolgt bevorzugt aber optional ein Glühen des rohrförmigen Bauteils, insbesondere des Rohres, (500 bis 850 °C, 30 Sekunden bis 12 h) unmittelbar nach dem Längsnahtschweißen oder Spiralnahtschweißen, beispielsweise induktiv oder im Durchlaufofen oder in stationären Ofeneinheiten, wie beispielsweise im Herdofen oder Muffelofen. Alternativ kann bei einem geringen Umformgrad und ausreichender verbleibender Restduktilität für die anschließende Innenhochdruckumformung auf die Glühung verzichtet werden und somit eine Weiterverarbeitung im verfestigten Zustand erfolgen. Anschließend erfolgt das erfindungsgemäße Innenhochdruckumformen bei einer bevorzugten Temperatur von 60 bis 450 °C. Die Erwärmung erfolgt vorzugsweise über das Wirkmedium. Das Umformen kann in mehreren Schritten erfolgen. Das Bauteil weist nach dem Halbwarm-Innenhochdruckumformen vorzugsweise noch mindestens 50 % des Ausgangsaustenitanteils auf. Ein vorteilhafter Temperaturbereich für das Innenhochdruckumformen liegt zwischen 60 und 450 °C.

In Bezug auf das über Rollumformen oder Innenhochdruckumformen erhaltene Bauteil ergeben sich folgende Abhängigkeiten von Zugfestigkeit Rm in MPa und Bruchdehnung A80 in %:

| | |
|---|---|
| Rm von 700 bis 800 MPa: | Rm x A80 ≥ 15400 bis zu 50000 MPa% |
| Rm von über 800 bis 900 MPa: | Rm x A80 ≥ 14400 bis zu 50000 MPa% |
| Rm von über 900 bis 1100 MPa: | Rm x A80 ≥ 13500 bis zu 45000 MPa% |
| Rm von über 1100 bis 1200 MPa: | Rm x A80 ≥ 13200 bis zu 45000 MPa% |
| Rm von über 1200 bis 1350 MPa: | Rm x A80 ≥ 11200 bis zu 45000 MPa% |
| Rm von über 1350 bis 1800 MPa: | Rm x A80 ≥ 8000 bis zu 45000 MPa% |
| Rm von über 1800 MPa: | Rm x A80 ≥ 4000 bis zu 30000 MPa% |

Dieses Stahlflachprodukt aus dem mittel-manganhaltigen TRIP(TRansformation Induced Plasticity)- und/oder TWIP(TWinning Induced Plasticity)-Stahl weist eine hervorragende Kalt- und Halbwarmumformbarkeit, erhöhten Widerstand gegen wasserstoffinduzierte verzögerte Rissbildung (delayed fracture), gegen Wasserstoffversprödung (hydrogen embrittlement) nach der Umformung sowie gegen Flüssigmetallversprödung (LME) beim Schweißen auf.

In üblicher Weise wird das vorbeschriebene Stahlflachprodukt mit einer nachfolgend angeführten Erzeugungsroute hergestellt:
- Erschmelzen einer Stahlschmelze mit der vorstehend beschriebenen chemischen Zusammensetzung in einem über die Prozessroute Hochofen-Stahlwerk oder Elektrolichtbogenofen-Stahlwerk mit optionaler Vakuumbehandlung der Schmelze;
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,

- Erwärmen des Vorbandes auf eine Walztemperatur von 1050 bis 1250°C oder Inlinewalzen aus der Gießhitze (erste Hitze) heraus,
- Warmwalzen des Vorbandes oder der Bramme oder der Dünnbramme zu einem Warmband mit einer Dicke von 20 bis 0,8 mm mit einer Walzendtemperatur von 1050 bis 800°C,
- Aufhaspeln des Warmbandes bei einer Temperatur von mehr als 100 bis 800°C,
- Beizen des Warmbandes,
- Glühen des Warmbandes in einer Durchlauf- oder Haubenglühanlage beziehungsweise in einer kontinuierlichen oder diskontinuierlichen Glühanlage bei einer Glühzeit von 1 min. bis 24 h und Temperaturen von 500 bis 840°C,
- optionales Kaltwalzen des Warmbandes bei Raumtemperatur, bevorzugt mit einem Vorwärmen auf 60 bis unterhalb Ac3-Temperatur, bevorzugt 60 bis 450°C vor dem ersten Walzstich zur Verringerung der Walzkräfte und Bildung von Verformungszwillingen im Austenit und bedarfsweisem Kühlen oder Erwärmen zwischen den Walzstichen auf 60 °C bis unterhalb der Ac3-Temperatur, bevorzugt 60 bis 450 °C,
- optionales Glühen bei 500 bis 840 °C für 1 min bis 24 h in einer Durchlaufglühanlage oder Haubenglühanlage,
- optionales elektrolytisches Verzinken oder Feuerverzinken des Stahlbandes oder Aufbringen einer anderweitigen organischen oder anorganischen Beschichtung.

Anschließend findet die erfindungsgemäße Umformung, insbesondere das Rollumformen oder Innenhockdruckumformen, des Stahlflachproduktes zu einem Bauteil statt.

Übliche Dickenbereiche für Vorband sind 1 mm bis 35 mm sowie für Brammen und Dünnbrammen 35 mm bis 450 mm. Vorzugsweise ist vorgesehen, dass die Bramme oder Dünnbramme zu einem Warmband mit einer Dicke von 20 mm bis 0,8 mm warmgewalzt wird oder das endabmessungsnah gegossene Vorband zu einem Warmband mit einer Dicke von 8 mm bis 0,8 mm warmgewalzt wird. Das Kaltband hat eine Dicke von üblicherweise unter 3 mm, vorzugsweise 0,1 bis 1,4 mm.

Im Zusammenhang mit dem vorstehenden erfindungsgemäßen Verfahren wird ein endabmessungsnah mit dem Zwei-Rollen Gießverfahren erzeugtes Vorband mit einer Dicke von kleiner gleich 3 mm, vorzugsweise 1 mm bis 3 mm, bereits als Warmband verstanden. Das so als Warmband produzierte Vorband weist, bedingt durch die eingebrachte Umformung der beiden gegenläufigen Walzen, keine Gussstruktur auf. Ein Warmwalzen findet somit bereits inline während des Zwei-Rollen-Gießverfahrens statt, so dass ein separates Erwärmen und Warmwalzen optional entfallen kann.

Das Kaltwalzen des Warmbandes kann bei Raumtemperatur oder vorteilhaft bei erhöhter Temperatur mit einer Erwärmung vor dem ersten Walzstich und/oder Erwärmungen in einem weiteren oder zwischen mehreren Walzstichen stattfinden. Das Kaltwalzen bei erhöhter Temperatur ist vorteilhaft, um die Walzkräfte zu reduzieren und die Bildung von Verformungszwillingen (TWIP-Effekt) zu begünstigen. Vorteilhafte Temperaturen des Walzgutes vor dem ersten Walzstich betragen 60°C bis unterhalb Ac3-Temperatur, bevorzugt 60 bis 450°C.

Erfolgt das Kaltwalzen in mehreren Walzstichen ist es vorteilhaft, das Stahlband zwischen den Walzstichen auf eine Temperatur von 60°C bis unterhalb Ac3-Temperatur, bevorzugt 60 bis 450°C, zwischen zu erwärmen bzw. herunter zu kühlen, da der TWIP-Effekt in diesem Bereich besonders vorteilhaft zum Tragen kommt. Je nach Walzgeschwindigkeit und Umformgrad kann sowohl ein Zwischenerwärmen, bspw. bei sehr niedrigen Umformgraden und Walzgeschwindigkeiten, als auch eine zusätzliche Kühlung, bedingt durch die Erwärmung des Werkstoffs beim schnellen Walzen und hohen Umformgraden, vorgenommen werden.

Nach einem Kaltwalzen des Warmbandes bei Raumtemperatur ist das Stahlband zur Wiederherstellung ausreichender Umformeigenschaften in einer Durchlaufglühanlage Durchlauf- oder Haubenglühanlage beziehungsweise in einer kontinuierlichen oder diskontinuierlichen Glühanlage vorteilhaft bei einer Glühzeit von 1 min. bis 24 h, vorzugsweise kleiner 10 min., und Temperaturen von 500 bis 840°C zu glühen. Falls zur Erzielung bestimmter Werkstoffeigenschaften erforderlich, kann dieser Glühvorgang auch bei dem bei erhöhter Temperatur gewalzten Stahlband erfolgen.

Nach der Glühbehandlung wird das Stahlband vorteilhaft auf eine Temperatur von 250°C bis Raumtemperatur abgekühlt und anschließend, falls erforderlich, zur Einstellung der geforderten mechanischen Eigenschaften, im Zuge einer Alterungsbehandlung, auf eine Temperatur von 300 bis 450°C wieder erwärmt, bei dieser Temperatur für bis zu 5 min. gehalten und anschließend auf Raumtemperatur abgekühlt. Die Alterungsbehandlung kann vorteilhaft in einer Durchlaufglühanlage durchgeführt werden.

Das so hergestellte Stahlflachprodukt kann optional elektrolytisch verzinkt oder feuerverzinkt werden. In einer vorteilhaften Weiterbildung erhält das so hergestellte Stahlband anstelle oder nach dem elektrolytischen Verzinken oder Feuerverzinken eine Beschichtung auf organischer oder anorganischer Basis. Dies können zum Beispiel organische Beschichtungen, Kunststoffbeschichtungen oder Lacke oder anderweitige anorganische Beschichtungen wie beispielsweise Eisenoxidschichten sein.

Nach dem vorbeschriebenen Verfahren kann ein umgeformtes Bauteil hergestellt werden. Das vorzugsweise bei erhöhter Temperatur umgeformte Bauteil weist bei gleichem Umformgrad mindestens die gleichen oder höhere Festigkeitseigenschaften (Streck-/Dehngrenze und/oder Zugfestigkeit) im Vergleich zu einem bei Raumtemperatur umgeformten Bauteil auf, wobei die Bruchdehnung im Vergleich zum Umformen bei Raumtemperatur um mindestens 10 % höher liegt. Analog ist es möglich, vergleichbare Kennwerte für die Bruchdehnung einzustellen, wobei der Kennwert für die Festigkeit (Streck-/Dehngrenze, und/oder Zugfestigkeit) im Vergleich um 10 % oberhalb der Kennwerte vom Umformen bei Raumtemperatur liegt. Das halbwarm umgeformte Bauteil weist einen erhöhten Widerstand gegenüber wasserstoffinduzierter Versprödung und verzögerter Rissbildung auf, da der TRIP-Effekt zumindest teilweise unterdrückt wird. Auch findet keine Flüssigmetallversprödung beim Schweißen statt.

Mit der Erfindung ist die Herstellung eines hochfesten Bauteils möglich, welches eine im Vergleich zu niedrig legierten Stählen gleicher Festigkeitsklasse deutlich verbesserte Restdehnung und/oder Restzähigkeit aufweist und im Vergleich zu für derartige Anwendungen derzeit genutzten hochmangan- und/oder hoch-Cr-legierten und/oder Cr-Ni oder sonstigen hochlegierten Stählen mit Legierungsgehalt > 12 Gew.-% deutlich kostengünstiger ist.

Vorteilhaft bietet sich eine Verwendung eines nach dem vorbeschriebenen Verfahren hergestellten Bauteils im Kraftfahrzeugbau, Schienenfahrzeugbau, Schiffsbau, Anlagenbau, Infrastrukturbau, in der Luft- und Raumfahrt, Hausgerätetechnik und in geschweißten Platinen (tailored welded blanks) an.

Ein nach dem erfindungsgemäßen Verfahren hergestelltes Stahlband weist vorteilhaft eine Dehngrenze Rp0,2 von 300 bis 1350 MPa, eine Zugfestigkeit Rm von 1100 bis 2200 MPa und eine Bruchdehnung A80 von mehr als 4 bis 41% auf, wobei hohen Festigkeiten tendenziell niedrigere Bruchdehnungen zuzuordnen sind und umgekehrt:

| | |
|---|---|
| Rm von 700 bis 800 MPa: | Rm x A80 ≥ 15400 bis zu 50000 MPa% |
| Rm von über 800 bis 900 MPa: | Rm x A80 ≥ 14400 bis zu 50000 MPa% |
| Rm von über 900 bis 1100 MPa: | Rm x A80 ≥ 13500 bis zu 45000 MPa% |
| Rm von über 1100 bis 1200 MPa: | Rm x A80 ≥ 13200 bis zu 45000 MPa% |
| Rm von über 1200 bis 1350 MPa: | Rm x A80 ≥ 11200 bis zu 45000 MPa% |
| Rm von über 1350 bis 1800 MPa: | Rm x A80 ≥ 8000 bis zu 45000 MPa% |
| Rm von über 1800 MPa: | Rm x A80 ≥ 7200 bis zu 30000 MPa% |

Für die Bruchdehnungsuntersuchungen wurde gemäß DIN 50 125 die Probenform 2 mit einer Anfangsmesslänge von A80 verwendet.

Die Verwendung des Begriffs "bis" in den Definitionen der Gehaltsbereiche, wie beispielsweise 0,01 bis 1 Gew.-%, bedeutet, dass die Eckwerte - im Beispiel 0,01 und 1 - mit eingeschlossen sind.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in der erfindungsgemäßen Legierung näher eingegangen werden. Nachfolgend werden die positiven Effekte der erfindungsgemäß verwendeten Legierungselemente beschrieben.

Kohlenstoff C: C wird benötigt zur Bildung von Karbiden, stabilisiert den Austenit und erhöht die Festigkeit. Höhere Gehalte an C verschlechtern die Schweißeigenschaften und führen zur Verschlechterung der Dehnungs- und Zähigkeitseigenschaften, weshalb ein maximaler Gehalt von 0,9 Gew.-%, bevorzugt 0,35 Gew.-%, festgelegt wird. Um die gewünschte Kombination von Festigkeits- und Dehnungseigenschaften des Werkstoffs zu erreichen, ist eine Mindestzugabe von 0,0005 Gew.-%, bevorzugt 0,05 Gew.-%, erforderlich.

Mangan Mn: Mn stabilisiert den Austenit, erhöht die Festigkeit und die Zähigkeit und ermöglicht eine verformungsinduzierte Martensit- und/oder Zwillingsbildung in der erfindungsgemäßen Legierung. Gehalte kleiner 4 Gew.-% sind nicht ausreichend zur Stabilisierung des Austenits und verschlechtern somit die Dehnungseigenschaften, während bei Gehalten von 12 Gew.-% und mehr der Austenit zu stark stabilisiert wird und dadurch die Festigkeitseigenschaften, insbesondere die 0,2 % Dehngrenze, verringert werden. Für den erfindungsgemäßen Manganstahl mit mittleren Mangangehalten wird ein Bereich von größer 5 bis kleiner 10 Gew.-% bevorzugt.

Aluminium Al: Al verbessert die Festigkeits- und Dehnungseigenschaften, senkt die spezifische Dichte und beeinflusst das Umwandlungsverhalten der erfindungsgemäßen Legierung. Zu hohe Gehalte an Al verschlechtern die Dehnungseigenschaften. Auch verschlechtern höhere Al-Gehalte das Gießverhalten im Strangguss deutlich. Hierdurch entsteht ein höherer Aufwand beim Vergießen. Hohe Al-Gehalte verzögern die Ausscheidung von Karbiden in der erfindungsgemäßen Legierung. Daher wird ein Al-Gehalt von 0 bis 10 Gew.-%, bevorzugt 0,05 bis 5 Gew.-%, besonders bevorzugt von größer 0,5 bis 3 Gew.-%, festgelegt.

Silizium Si: Die optionale Zugabe von Si in höheren Gehalten behindert die Kohlenstoffdiffusion, verringert die spezifische Dichte und erhöht die Festigkeit und die Dehnungs- sowie Zähigkeitseigenschaften. Des Weiteren konnte eine Verbesserung der Kaltwalzbarkeit durch Zulegieren von Si beobachtet werden. Höhere Si-Gehalte führen zu einer Versprödung des Werkstoffs und beeinflussen die Warm- und Kaltwalzbarkeit sowie die Beschichtbarkeit beispielsweise durch Verzinken negativ. Daher wird ein Si-Gehalt von 0 bis 6 Gew.-%, bevorzugt 0,05 bis 3 Gew.-%, besonders bevorzugt von 0,1 bis 1,5 Gew.-%, festgelegt.

Chrom Cr: Die optionale Zugabe von Cr verbessert die Festigkeit und verringert die Korrosionsrate, verzögert die Ferrit- und Perlitbildung und bildet Karbide. Höhere Gehalte führen zu einer Verschlechterung der Dehnungseigenschaften. Daher wird ein Cr-Gehalt von 0 bis 6 Gew.-%, bevorzugt 0,1 bis 4 Gew.-%, besonders bevorzugt von größer 0,5 bis 2,5 Gew.-%, festgelegt.

Mikrolegierungselemente werden in der Regel nur in sehr geringen Mengen zugegeben. Sie wirken im Gegensatz zu den Legierungselementen hauptsächlich durch Ausscheidungsbildung können aber auch in gelöstem Zustand die Eigenschaften beeinflussen. Bereits geringe Mengenzugaben der Mikrolegierungselemente beeinflussen die Verarbeitungs- und Endeigenschaften erheblich. Insbesondere bei der Warmumformung beeinflussen Mikrolegierungselemente das Rekristallisationsverhalten vorteilhaft und bewirken eine Kornfeinung.

Typische Mikrolegierungselemente sind Vanadium, Niob und Titan. Diese Elemente können im Eisengitter gelöst werden und bilden mit Kohlenstoff und Stickstoff Carbide, Nitride und Carbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Gehalte von über 1,5 Gew.-% beziehungsweise 1 Gew.-% bringen keine weiteren Vorteile. Für Vanadium und Niob wird optional bevorzugt ein Mindestgehalt von 0,005 Gew.-% und ein Maximalgehalt von 0,6 Gew.-% beziehungsweise 0,4 Gew.-%, besonders bevorzugt ein Mindestgehalt von 0,01 Gew.-% und ein Maximalgehalt von 0,3 Gew.-% beziehungsweise 0,1 Gew.-%, vorgesehen.

Titan Ti: Ti wirkt als Karbidbildner kornfeinend, wodurch gleichzeitig die Festigkeit, Zähigkeit und Dehnungseigenschaften verbessert werden und vermindert die interkristalline Korrosion. Gehalte an Ti von über 1,5 Gew.-% verschlechtern die Dehnungseigenschaften, weshalb optional ein Maximalgehalt von 1,5 Gew.-%, bevorzugt 0,6 Gew.-%, besonders bevorzugt 0,3 Gew.-%, festgelegt wird. Mindestgehalte von 0,005 Gew.-%, bevorzugt von 0,01 Gew.-%, können vorgesehen werden, um Stickstoff abzubinden und Ti vorteilhaft auszuscheiden.

Molybdän Mo: Mo wirkt als Karbidbildner, erhöht die Festigkeit und erhöht den Widerstand gegen verzögerte Rissbildung und Wasserstoffversprödung. Hohe Gehalte an Mo verschlechtern die Dehnungseigenschaften. Daher wird optional ein Mo-Gehalt von 0,005 bis 1,5 Gew.-%, besonders bevorzugt von größer 0,01 bis 0,6 Gew.-%, festgelegt.

Zinn Sn: Sn steigert die Festigkeit, reichert sich jedoch ähnlich Kupfer bei höheren Temperaturen unter der Zunderschicht und an den Korngrenzen an. Es führt durch Eindringen in die Korngrenzen zur Bildung niedrig schmelzender Phasen und damit verbunden zu Rissen im Gefüge und zu Lotbrüchigkeit, weshalb optional ein Maximalgehalt 0,5 Gew.-%, bevorzugt von kleiner 0,2 Gew.-%, besonders bevorzugt von kleiner 0,05 Gew.-%, vorgesehen ist.

Kupfer Cu: Cu verringert die Korrosionsrate und steigert die Festigkeit. Gehalte oberhalb 3 Gew.-% verschlechtern die Herstellbarkeit durch Bildung niedrig schmelzender Phasen beim Vergießen und Warmwalzen weshalb optional ein Maximalgehalt von 3 Gew.-%, bevorzugt von kleiner 0,5 Gew.-%, besonders bevorzugt von kleiner 0,1 Gew.-%, festgelegt wird.

Wolfram W: W wirkt als Karbidbildner und erhöht die Festigkeit und Warmfestigkeit. Gehalte an W von über 5 Gew.-% verschlechtern die Dehnungseigenschaften, weshalb optional ein Maximalgehalt von 5 Gew.-% festgelegt wird. Bevorzugt ist ein Gehalt von 0,01 Gew.-% bis 3 Gew.-% vorgesehen und besonders bevorzugt von 0,2 bis 1,5 Gew.-%.

Kobalt Co: Co erhöht die Festigkeit des Stahls, stabilisiert den Austenit und verbessert die Warmfestigkeit. Gehalte von über 8 Gew.-% verschlechtern die Dehnungseigenschaften. Der Co-Gehalt wird daher mit maximal 8 Gew.-%, bevorzugt von 0,01 bis 5 Gew.-%, besonders bevorzugt von 0,3 bis 2 Gew.-%, festgelegt.

Zirkonium Zr: Zr wirkt als Karbidbildner und verbessert die Festigkeit. Gehalte an Zr von über 0,5 Gew-% verschlechtern die Dehnungseigenschaften. Daher wird ein Zr-Gehalt von 0 bis 0,5 Gew.-%, bevorzugt 0,005 bis 0,3 Gew.-%, besonders bevorzugt von 0,01 bis 0,2 Gew.-%, festgelegt.

Tantal Ta: Ta wirkt ähnlich wie Niob als Karbidbildner kornfeinend und verbessert dadurch gleichzeitig die Festigkeit, Zähigkeit und Dehnungseigenschaften. Gehalte von über 0,5 Gew.-% bewirken keine weitere Verbesserung der Eigenschaften. Daher wird optional ein Maximalgehalt von 0,5 Gew.-% festgelegt. Bevorzugt werden ein Minimalgehalt von 0,005 und ein Maximalgehalt von 0,3 Gew.-% festgelegt, in welchem die Kornfeinung vorteilhaft bewirkt werden kann. Zur Verbesserung der Wirtschaftlichkeit und Optimierung der Kornfeinung wird insbesondere bevorzugt ein Gehalt von 0,01 Gew.-% bis 0,1 Gew.-% angestrebt.

Tellur Te: Te verbessert die Korrosionsbeständigkeit und die mechanischen Eigenschaften sowie die spanende Bearbeitbarkeit. Des Weiteren erhöht Te die Festigkeit von Mangansulfiden (MnS), welches dadurch beim Warm- und Kaltwalzen weniger stark in Walzrichtung gelängt wird. Gehalte oberhalb 0,5 Gew.-% verschlechtern die Dehnungs- und Zähigkeitseigenschaften, weshalb ein Maximalgehalt von 0,5 Gew.-% festgelegt wird. Optional wird ein Minimalgehalt von 0,005 Gew.-% und ein Maximalgehalt von 0,3 Gew.-% festgelegt, welche die mechanischen Eigenschaften vorteilhaft verbessern und die Festigkeit vorhandener MnS erhöht. Weiterhin wird ein Minimalgehalt von 0,01 Gew.-% und ein Maximalgehalt von 0,1 Gew.-% bevorzugt, welche eine Optimierung der mechanischen Eigenschaften bei gleichzeitiger Reduktion der Legierungskosten ermöglichen.

Bor B: B verzögert die Austenitumwandlung, verbessert die Warmumformeigenschaften von Stählen und erhöht die Festigkeit bei Raumtemperatur. Es entfaltet seine Wirkung bereits bei sehr geringen Legierungsgehalten. Gehalte oberhalb 0,15 Gew.-% verschlechtern die Dehnungs- und Zähigkeitseigenschaften stark, weshalb der Maximalgehalt auf 0,15 Gew.-% festgelegt wird. Optional wird ein Minimalgehalt von 0,001 Gew.-% und Maximalgehalt von 0,08, vorzugsweise ein Minimalgehalt von 0,002 Gew.-% und Maximalgehalt von 0,01 festgelegt, um die festigkeitssteigernde Wirkung von Bor vorteilhaft zu nutzen.

Phosphor P: P ist ein Spurenelement, stammt überwiegend aus dem Eisenerz und wird im Eisengitter als Substitutionsatom gelöst. Phosphor steigert durch Mischkristallverfestigung die Härte und verbessert die Härtbarkeit. Es wird allerdings in der Regel angestrebt, den Phosphorgehalt soweit wie möglich abzusenken, da er unter anderem durch seine geringe Diffusionsgeschwindigkeit stark seigerungsanfällig ist und im hohen Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 °C herauf. Aus vorgenannten Gründen ist der Phosphorgehalt auf Werte kleiner 0,1 Gew.-%, bevorzugt kleiner 0,04 Gew.-%, begrenzt.

Schwefel S: S ist wie Phosphor als Spurenelement im Eisenerz aber insbesondere bei der Erzeugungsroute über den Hochofenprozess im Koks gebunden. Er ist im Stahl im Allgemeinen unerwünscht, da er zu starker Seigerung neigt und stark versprödend wirkt, wodurch die Dehnungs- und Zähigkeitseigenschaften verschlechtert werden. Es wird daher versucht, möglichst geringe Mengen an Schwefel in der Schmelze zu erreichen (beispielsweise durch eine Tiefentschwefelung). Aus vorgenannten Gründen ist der Schwefelgehalt auf Werte kleiner 0,1 Gew.-%, bevorzugt kleiner 0,02 Gew.-%, begrenzt.

Stickstoff N: N ist ebenfalls ein Begleitelement aus der Stahlherstellung. Er verbessert im gelösten Zustand bei höher manganhaltigen Stählen mit größer oder gleich 4 Gew.-% Mn die Festigkeits- und Zähigkeitseigenschaften. Niedriger Mn-legierte Stähle mit weniger als 4 Gew.-% neigen in Gegenwart von freiem Stickstoff zu einem starken Alterungseffekt. Der Stickstoff diffundiert schon bei geringen Temperaturen an Versetzungen und blockiert diese. Er bewirkt damit einen Festigkeitsanstieg verbunden mit einem rapiden Zähigkeitsverlust. Ein Abbinden des Stickstoffes in Form von Nitriden ist beispielsweise durch Zulegieren von Titan oder Aluminium möglich, wobei sich insbesondere Aluminiumnitride negativ auf die Umformeigenschaften der erfindungsgemäßen Legierung auswirken. Aus vorgenannten Gründen ist der Stickstoffgehalt auf weniger als 0,1 Gew.-%, bevorzugt kleiner 0,05 Gew.-%, begrenzt.

## Patentansprüche

1. Verfahren zur Herstellung eines Bauteils aus einem mittelmanganhaltigen Stahlflachprodukt, das mit folgender chemischer Zusammensetzung in Gew.-% hergestellt wird:
C: 0,0005 bis 0,9, vorzugsweise 0,05 bis 0,35
Mn: 4 bis 12, vorzugsweise größer 5 bis kleiner 10
Rest Eisen einschließlich unvermeidbarer stahlbegleitender Elemente, mit optionaler Zulegierung von:
Al: 0 bis 10, bevorzugt 0,05 bis 5, insbesondere bevorzugt größer 0,5 bis 3
Si: 0 bis 6, bevorzugt 0,05 bis 3, insbesondere bevorzugt 0,1 bis 1,5
Cr: 0 bis 6, bevorzugt 0,1 bis 4, insbesondere bevorzugt größer 0,5 bis 2,5
Nb: 0 bis 1, bevorzugt 0,005 bis 0,4, insbesondere bevorzugt 0,01 bis 0,1
V: 0 bis 1,5, bevorzugt 0,005 bis 0,6, insbesondere bevorzugt 0,01 bis 0,3
Ti: 0 bis 1,5, bevorzugt 0,005 bis 0,6, insbesondere bevorzugt 0,01 bis 0,3
Mo: 0 bis 3, bevorzugt 0,005 bis 1,5, insbesondere bevorzugt 0,01 bis 0,6
Sn: 0 bis 0,5, bevorzugt kleiner 0,2, insbesondere bevorzugt kleiner 0,05
Cu: 0 bis 3, bevorzugt kleiner 0,5, insbesondere bevorzugt kleiner 0,1
W: 0 bis 5, bevorzugt 0,01 bis 3, insbesondere bevorzugt 0,2 bis 1,5
Co: 0 bis 8, bevorzugt 0,01 bis 5, insbesondere bevorzugt 0,3 bis 2
Zr: 0 bis 0,5, bevorzugt 0,005 bis 0,3, insbesondere bevorzugt 0,01 bis 0,2
Ta: 0 bis 0,5, bevorzugt 0,005 bis 0,3, insbesondere bevorzugt 0,01 bis 0,1
Te: 0 bis 0,5, bevorzugt 0,005 bis 0,3, insbesondere bevorzugt 0,01 bis 0,1
B: 0 bis 0,15, bevorzugt 0,001 bis 0,08, insbesondere bevorzugt 0,002 bis 0,01
P: kleiner 0,1, bevorzugt kleiner 0,04
S: kleiner 0,1, bevorzugt kleiner 0,02
N: kleiner 0,1, bevorzugt kleiner 0,05,
das Stahlflachprodukt mit einem Gefüge hergestellt wird, das einen Austenitanteil von 10 bis 80 %, 20 bis 90 % Martensit, Ferrit und Bainit, wobei mindestens 30 % des Martensits als angelassener Martensit vorliegt, aufweist, bevorzugt 40 bis 80 % Austenit, weniger als 20 % Ferrit/Bainit und Rest Martensit aufweist, und mit TRIP/TWIP-Effekt, umfassend die Schritte:
- Vorwärmen des Stahlflachprodukts auf eine gewünschte Temperatur im Bereich von 60 °C bis Ac3 und
- Umformen des Stahlflachprodukts zu einem Bauteil mit einem ersten Umformschritt bei einer Temperatur des Stahlflachprodukts von 60 °C bis 450 °C, wobei durch das Vorwärmen vor dem ersten Umformschritt die gewünschte Temperatur des Stahlflachproduktes bereits erreicht ist und nicht erst durch die Umformung an sich entsteht.

2. Verfahren nach Anspruch 1, **dadurch gekennzeichnet, dass** das Stahlflachprodukt mit weiteren Umformschritten bei einer Temperatur des Stahlflachprodukts von -100 °C bis unterhalb Ac3, zu einem Bauteil umgeformt wird.

3. Verfahren nach Anspruch 1 oder 2, **dadurch gekennzeichnet, dass** das Stahlflachprodukt mit weiteren Umformschritten bei einer Temperatur des Stahlflachprodukts von einem Temperaturbereich von 15 - 25 °C bis unterhalb Ac3, vorzugsweise von einem Temperaturbereich von 15 - 25 °C bis 450 °C, zu einem Bauteil umgeformt wird.

4. Verfahren nach mindestens einem der Ansprüche 1 bis 3, **dadurch gekennzeichnet, dass** das Stahlflachprodukt mit weiteren Umformschritten bei einer Temperatur des Stahlflachprodukts von -100 °C bis 60 °C zu einem Bauteil umgeformt wird.

5. Verfahren nach mindestens einem der Ansprüche 1 bis 4, **dadurch gekennzeichnet, dass** das Stahlflachprodukt mit den weiteren einzelnen Umformschritten bei unterschiedlichen Temperaturen, die jeweils lokal begrenzt sind, zu einem Bauteil umgeformt wird.

6. Verfahren nach mindestens einem der Ansprüche 1 bis 5, **dadurch gekennzeichnet, dass** das Stahlflachprodukt von einer Seite oder von beiden Seiten vorgewärmt wird.

7. Verfahren nach mindestens einem der Ansprüche 1 bis 6, **dadurch gekennzeichnet, dass** das Stahlflachprodukt beim Umformen zwischen den Umformschritten auf Temperaturen zwischen -100 °C bis unterhalb Ac3 zwischenerwärmt oder zwischengekühlt wird.

8. Verfahren nach mindestens einem der Ansprüche 1 bis 7, **dadurch gekennzeichnet, dass** das Stahlflachprodukt mittels Rollumformen umgeformt wird.

9. Verfahren nach einem der Ansprüche 1 bis 8, **dadurch gekennzeichnet, dass** das Stahlflachprodukt zu einem rohrförmigen Bauteil, insbesondere zu einem Rohr, eingeformt, längs- oder spiralnahtgeschweißt und innenhochdruckumgeformt wird und optional geglüht wird.

10. Verfahren nach einem der Ansprüche 1 bis 9, **dadurch gekennzeichnet, dass** das Stahlflachprodukt beziehungsweise das Bauteil metallisch, anorganisch oder organisch beschichtet wird.

## Claims

1. Method for manufacturing a component from a medium manganese-containing sheet steel product produced so as to have the following chemical composition in wt.%:
C: 0.0005 to 0.9, preferably 0.05 to 0.35
Mn: 4 to 12, preferably greater than 5 to less than 10
the remainder being iron, including unavoidable steel-accompanying elements, with the optional addition by alloying of:
Al: 0 to 10, preferably 0.05 to 5, particularly preferably greater than 0.5 to 3
Si: 0 to 6, preferably 0.05 to 3, particularly preferably 0.1 to 1.5
Cr: 0 to 6, preferably 0.1 to 4, particularly preferably greater than 0.5 to 2.5
Nb: 0 to 1, preferably 0.005 to 0.4, particularly preferably 0.01 to 0.1
V: 0 to 1.5, preferably 0.005 to 0.6, particularly preferably 0.01 to 0.3
Ti: 0 to 1.5, preferably 0.005 to 0.6, particularly preferably 0.01 to 0.3
Mo: 0 to 3, preferably 0.005 to 1.5, particularly preferably 0.01 to 0.6
Sn: 0 to 0.5, preferably less than 0.2, particularly preferably less than 0.05
Cu: 0 to 3, preferably less than 0.5, particularly preferably less than 0.1
W: 0 to 5, preferably 0.01 to 3, particularly preferably 0.2 to 1.5
Co: 0 to 8, preferably 0.01 to 5, particularly preferably 0.3 to 2
Zr: 0 to 0.5, preferably 0.005 to 0.3, particularly preferably 0.01 to 0.2
Ta: 0 to 0.5, preferably 0.005 to 0.3, particularly preferably 0.01 to 0.1
Te: 0 to 0.5, preferably 0.005 to 0.3, particularly preferably 0.01 to 0.1
B: 0 to 0.15, preferably 0.001 to 0.08, particularly preferably 0.002 to 0.01
P: less than 0.1, preferably less than 0.04
S: less than 0.1, preferably less than 0.02
N: less than 0.1, preferably less than 0.05,
the sheet steel product is manufactured so as to have a structure comprising an austenite content of 10 to 80%, 20 to 90% martensite, ferrite and bainite, wherein at least 30% of the martensite is tempered martensite, preferably comprising 40 to 80% austenite, less than 20% ferrite/bainite and the remainder martensite, and having a TRIP/TWIP effect, the method comprising the steps of:
- preheating the sheet steel product to a desired temperature in the range of 60°C to Ac3 and
- shaping the sheet steel product to form a component in a first shaping step at a sheet steel product temperature of 60°C to 450°C, wherein the desired sheet steel product temperature is already reached by preheating before the first shaping step, and does not arise only as a result of the shaping itself.

2. Method according to claim 1, **characterised in that** the sheet steel product is shaped to form a component in further shaping steps at a sheet steel product temperature of - 100°C to below Ac3.

3. Method according to claim 1 or claim 2, **characterised in that** the sheet steel product is shaped to form a component in further shaping steps at a sheet steel product temperature in a temperature range from 15 - 25°C to below Ac3, preferably in a temperature range from 15 - 25°C to 450°C.

4. Method according to at least one of claims 1 to 3, **characterised in that** the sheet steel product is shaped to form a component in further shaping steps at a sheet steel product temperature of -100°C to 60°C.

5. Method according to at least one of claims 1 to 4, **characterised in that** the sheet steel product is shaped to form a component in the further individual shaping steps at different temperatures, each of which is locally limited.

6. Method according to at least one of claims 1 to 5, **characterised in that** the sheet steel product is preheated from one or both sides.

7. Method according to at least one of claims 1 to 6, **characterised in that** during shaping, the sheet steel product is temporarily heated or temporarily cooled between the shaping steps to temperatures between -100°C to below Ac3.

8. Method according to at least one of claims 1 to 7, **characterised in that** the sheet steel product is shaped by means of a roll-forming process.

9. Method according to any of claims 1 to 8, **characterised in that** the sheet steel product is shaped into a tubular component, in particular into a tube, longitudinally or spirally seam welded and shaped by internal high pressure, and optionally annealed.

10. Method according to any of claims 1 to 9, **characterised in that** the sheet steel product or the component is coated using a metal, inorganic or organic coating.

## Revendications

1. Procédé de fabrication d'un composant à partir d'un produit plat en acier à teneur moyenne en manganèse qui est produit avec la composition chimique suivante en % en poids:
C: 0,0005 à 0,9, de préférence 0,05 à 0,35
Mn: 4 à 12, de préférence plus à 5 à moins de 10
Le reste étant du Fer qui comprend les éléments inévitables accompagnant l'acier,
avec alliage facultatif de:
Al: 0 à 10, de préférence 0,05 à 5, de manière particulièrement préférée plus de 0,5 à 3
Si: 0 à 6, de préférence 0,05 à 3, de manière particulièrement préférée 0,1 à 1,5
Cr: 0 à 6, de préférence 0,1 à 4, de manière particulièrement préférée plus de 0,5 à 2,5
Nb: 0 à 1, de préférence 0,005 à 0,4 de manière particulièrement préférée 0,01 à 0,1
V: 0 à 1,5, de préférence 0,005 à 0,6, de manière particulièrement préférée 0,01 à 0,3
Ti: 0 à 1,5, de préférence 0,005 à 0,6, de manière particulièrement préférée 0,01 à 0,3
Mo: 0 à 3, de préférence 0,005 à 1,5, de manière particulièrement préférée 0,01 à 0,6
Sn: 0 à 0,5, de préférence moins de 0,2, de manière particulièrement préférée moins de 0,05
Cu: 0 à 3, de préférence moins de 0,5, de manière particulièrement préférée moins de 0,1
W: 0 à 5, de préférence 0,01 à 3, de manière particulièrement préférée 0,2 à 1,5
Co: 0 à 8, de préférence 0,01 à 5, de manière particulièrement préférée 0,3 à 2
Zr: 0 à 0,5, de préférence 0,005 à 0,3, de manière particulièrement préférée 0,01 à 0,2
Ta: 0 à 0,5, de préférence 0,005 à 0,3, de manière particulièrement préférée 0,01 à 0,1
Te: 0 à 0,5, de préférence 0,005 à 0,3, de manière particulièrement préférée 0,01 à 0,1
B: 0 à 0,15, de préférence 0,001 à 0,08, de manière particulièrement préférée 0,002 à 0,01
P: moins de 0,1, de préférence moins de 0,04
S: moins de 0,1, de préférence moins de 0,02
N: moins de 0,1, de préférence moins de 0,05,
le produit plat en acier étant fabriqué avec une structure qui a une teneur en austénite de 10 à 80 %, 20 à 90 % de martensite, de ferrite et de bainite, au moins 30% de martensite étant de la martensite revenue, de préférence 40 à 80 % d'austénite, moins de 20 % de ferrite/bainite et le reste étant de la martensite, et avec effet TRIP/TWIP, ledit procédé comprenant les étapes suivantes:
- préchauffer le produit plat en acier à une température souhaitée dans la gamme de 60 °C à Ac3 et
- transformer le produit plat en acier en un composant avec une première étape de transformation à une température du produit plat en acier de 60 °C à 450 °C, la température souhaitée du produit plat en acier étant déjà atteinte par préchauffage avant la première étape de transformation et ne résultant pas uniquement de la transformation elle-même.

2. Procédé selon la revendication 1, **caractérisé en ce que** le produit plat en acier est transformé en un composant avec des étapes de transformation supplémentaires à une température du produit plat en acier de -100 °C à une température au-dessous de Ac3.

3. Procédé selon la revendication 1 ou 2, **caractérisé en ce que** le produit plat en acier est transformé en un composant avec des étapes de transformation supplémentaires à une température du produit plat en acier dans une gamme de températures de 15 à 25 °C jusqu'à un température au-dessous de Ac3, de préférence dans une gamme de températures de 15 à 25 °C jusqu'à 450 °C.

4. Procédé selon l'une au moins des revendications 1 à 3, **caractérisé en ce que** le produit plat en acier est transformé en un composant avec d'autres étapes de transformation à une température du produit plat en acier de -100 °C à 60 °C.

5. Procédé selon l'une au moins des revendications 1 à 4, **caractérisé en ce que** le produit plat en acier est transformé en un composant avec les étapes de transformation individuelles supplémentaires à différentes températures, qui sont chacune limitées localement.

6. Procédé selon l'une au moins des revendications 1 à 5, **caractérisé en ce que** le produit plat en acier est préchauffé d'un côté ou des deux côtés.

7. Procédé selon l'une au moins des revendications 1 à 6, **caractérisé en ce que** le produit plat en acier est soumis à un chauffage intermédiaire ou un refroidissement intermédiaire entre les étapes de transformation à des températures comprises entre - 100 °C et une température au-dessous de Ac3.

8. Procédé selon l'une au moins des revendications 1 à 7, **caractérisé en ce que** le produit plat en acier est formé par profilage à galets.

9. Procédé selon l'une des revendications 1 à 8, **caractérisé en ce que** le produit plat en acier est transformé en un composant tubulaire, notamment un tube, est soudé longitudinalement ou en spirale et formé intérieurement sous haute pression et éventuellement recuit.

10. Procédé selon l'une des revendications 1 à 9, **caractérisé en ce que** le produit plat en acier ou le composant est pourvu d'un revêtement métallique, inorganique ou organique.
